(19) Europäisches Patentamt
European Patent Office
Office européen des brevets

(11) **EP 0 667 957 B1**

## (12) EUROPEAN PATENT SPECIFICATION

(45) Date of publication and mention
of the grant of the patent:
**28.01.1998 Bulletin 1998/05**

(21) Application number: **94900542.5**

(22) Date of filing: **05.11.1993**

(51) Int Cl.[6]: **G01N 27/447**

(86) International application number:
**PCT/US93/10632**

(87) International publication number:
**WO 94/10561 (11.05.1994 Gazette 1994/11)**

(54) **SEPARATION MEDIA FOR ELECTROPHORESIS**

ELEKTROFORETISCHE TRENNUNGSMEDIEN

MILIEU DE SEPARATION UTILE EN ELECTROPHORESE

(84) Designated Contracting States:
**AT BE CH DE DK ES FR GB GR IE IT LI LU MC NL PT SE**

(30) Priority: **05.11.1992 US 971956**

(43) Date of publication of application:
**23.08.1995 Bulletin 1995/34**

(73) Proprietor: **SOANE TECHNOLOGIES INC.**
**Hayward, CA 94545 (US)**

(72) Inventors:
• **SOANE, David, S.**
  **Piedmont, CA 94610 (US)**

• **BAE, Young, Chan**
  **Pleasanton, CA 94588 (US)**

(74) Representative: **Greaves, Carol Pauline et al**
**Mewburn Ellis**
**York House**
**23 Kingsway**
**London WC2B 6HP (GB)**

(56) References cited:
EP-A- 0 501 301          WO-A-90/07978
WO-A-91/11709            US-A- 4 732 930

## Description

## Background of the Invention

This invention relates to the field of electrophoresis, more specifically, to a sieving medium for electrophoretic separation of biopolymers.

Capillary electrophoresis (CE) has found widespread applications in analytical and biomedical research. The scope and sophistication of CE are rapidly increasing. CE can perform analytical separations that are often substantially better than those using established chromatographic methods such as high-performance liquid chromatography (HPLC). The separation modes of the conventional electrophoretic methods are slow, labor-intensive, prone to relatively poor reproducibility and have limited quantitative capability. Furthermore, it has been difficult to fully automate the process. The major advantages of capillary electrophoresis are that it can be fully automated, offers high resolution, and can quantitate minute amounts of samples, as reviewed by N.A. Guzman, L. Hernandez and S. Terabe, *Analytical Biotechnology,* Chapter 1, ed. by C. Horvath and J.G. Nikelly. ACS symposium series, ACS, Washington, DC (1990). These capabilities lie far beyond those of traditional electrophoretic methods.

CE has recently been used in the analysis of an extremely wide variety of molecules, including organic and inorganic anions and cations, drugs, dyes and their precursors, vitamins, carbohydrates, catecholamines, amino acids, proteins and peptides, nucleic acids, nucleotides, and oligonucleotides. In comparison with gas chromatography, supercritical fluid chromatography, and liquid chromatography, CE is the best separation technique from the point of view of molecular weight range of applicability. It is possible to separate in the same column species ranging in size from free amino acids to large proteins associated with complex molecular matrices.

From the detection point of view, HPLC provides better concentration sensitivity and CE provides better mass sensitivity. However, initial attempts to resolve complex mixtures of biological macromolecules in open CE columns were disappointing. The complex protein macromolecules present a serious problem when using untreated fused-silica capillaries due to the adsorption of many proteins onto the walls of the capillary. With oligonucleotides, the unfavorable mass-to-charge ratio tends to cause comigration of larger mixture components.

A highly advantageous solution to these difficulties was the development of gel-filled capillaries. Remarkably high separation efficiency has been obtained by gel-filled CE. To accomplish size selection in electrophoretic separation of mixtures of nucleic acids and SDS-denatured proteins, a cross-linked gel matrix is employed. However, the routine preparation of homogeneous stress-free gels in capillaries is difficult due to polymerization-induced shrinkage and appearance of bubbles inside the capillaries.

As an alternative to cross-linked gels, solutions of entangled polymer, such as polyethylene glycol, linear non-cross-linked polyacrylamides or (hydroxyethyl) cellulose (HEC) have been tested as macromolecular sieving media, as reported by P.D. Grossman and D.S. Soane, *Biopolymers,* 31, 1221 (1991); P.D. Grossman and D.S. Soane, *J. Chromatography,* 559, 257 (1991); M. J. Bode, *FEBS Lett.,* 65, 56 (1991); M. Zhu, D.L. Hansen, S. Burd and F. Gannon, *J. Chromatography,* 480, 311 (1989); A.M. Chin and J.C. Colburn, Am. *Biotech. Lab.,* 7, 16 (1989); D. Tietz, M.M. Gottlieb, J.S. Fawcett and A. Chrambach, *Electrophoresis,* 7, 217 (1986). This approach provides ease of filling and flushing the separation capillary after each analysis, thus avoiding the possible contamination from the previous analysis. However, entangled polymer solutions in the capillaries exhibit lower resolution and reproducibility than the cross-linked gels.

The resolving power of capillary electrophoresis (CE) using the prior art entangled polymer solutions as the separation media is not good for large analyte molecules, presumably as a result of the relevant time scales of the sieving polymers and analyte molecules. The residence time (or passage time) of analyte molecule in a mesh is controlled by the size and electrophoretic mobility of the analyte, mesh size of the network, and the imposed electric field strength. The life time of entanglement, i.e., mobility of strands forming the mesh, depends on network integrity, the length and concentration of macromolecules constituting the network. In order to achieve good resolution, the relaxation time of the entangled polymer solution should be orders of magnitude greater than the residence time of the analyte molecules.

Unfortunately, this condition does not necessarily hold in typical CE applications, as demonstrated in the examples separating DNA by CE using entangled polymer solutions, reported by T. Hino, *MS Thesis,* University of California, Berkeley (1991), demonstrating that the slow-mode relaxation time of polyacrylamide was $5.9 \times 10^{-4}$ sec (T3%, 25°C) for entangled solutions and $4.0 \times 10^{-3}$ sec (T3%, 25°C) for cross-linked systems. The typical residence time of DNA can be estimated from the literature (P.D. Grossman and D.S. Soane, *Biopolymers,* 31, 1221 (1991); P.D. Grossman and D.S. Soane, *J. Chromatography,* 559, 257 (1991); J. Sudor, F. Foret and P. Bocek, *Electrophoresis,* 12, 1056 (1991)) by assuming the two extremes (Ogston and biased reptation) = Residence time between

$$\left( \frac{\text{mesh size}}{(\text{electrophoretic velocity})_{\text{Ogston}}} \right)$$

and

$$\left(\frac{\text{DNA contour length}}{(\text{electrophoretic velocity})_{\text{reptation}}}\right)$$

where subscript Ogston means that the migrating solute behaves as an undeformable particle (Ogston Model) and reptation under the influence of large electric fields, the solute becomes more elongated, and the motion mimics that of a snake threading its way through the network. The calculated residence time limits of DNA are as follows: 1.5 x $10^{-5}$ to 1.8 x $10^{-4}$ sec. for 30 base pairs and 1.5 x $10^{-5}$ to 8.2 x $10^{-4}$ sec. for 100 base pairs. The calculated residence times of 100 base pairs are extrapolated from 30 base pairs data based on a hydrodynamic diameter per base pair of 3.3Å (K.S. Schmitz, *An Introduction to Dynamic Light Scattering by Macromolecules,* Academic Press, NY (1990); V. A. Branfield, Chapter 10, *Dynamic Light Scattering,* Plenum Press, NY (1985)). The results show clearly that the relaxation time of entangled polymer and residence time of DNA are very close. Therefore, sharp resolution cannot be expected for the high molecular weight of DNA using entangled polymers. The network imposing the sieving medium fails before the analyte moves through a mesh completely.

In summary, the conventional electrophoretic methods are slcw, labor-intensive, with relatively poorly reproducibility and have limited quantitative capability. Furthermore, it is difficult to accomplish a fully automated operation. CE promises to offer a solution for those problems. However, choosing the sieving medium is difficult. Open CE columns adsorb many proteins onto the walls of the capillaries. A cross-linked gel filled CE is complicated by problems in the routine preparation of homogenous stress-free gels in capillaries due to polymerization induced shrinkage and appearance of bubbles inside the capillaries. Entangled polymer solutions in the capillaries exhibit poor resolution and reproducibility. All the above problems can also be found with slab gel electrophoresis as well as other electrophoretic configurations.

An ionic gel which is capable of drastic volume change in response to a change of liquid medium composition, temperature pH or ion composition is described in US Patent No. 4,732,930.

It is an object of the present invention to provide an improved method and medium composition for separation of molecules, especially by capillary gel electrophoresis.

It is a further object of the present invention to provide a method and means to improve the resolution and reproducibility of entangled solutions, in combination with the ease of fill/flush.

It is another object of the present invention to provide a new class of separation media for CE and related electrophoretic technologies, including slab and annular configurations, as well as sequencers for DNA and protein, and methods of preparation and use thereof.

Methods of preparing sieving media and of filling and flushing of capillaries and other electrophoretic devices have been developed which combine the advantages of gel filled and entangled-polymer-solution filled systems such as good resolution, ease of fill and flush, and reuse of the capillary or device. Two different approaches are used to make a stable system with good resolution that is easily filled and flushed for reuse of the device: chemical cross-linking and physical cross-linking. In another embodiment, the network is formed with a polyelectrolyte, with the resulting ionic medium achieving greater resolution than the uncharged medium.

Cross-linked gel particles are used as a sieving medium in chemically cross-linked systems. The properties of gels depend on the gel state represented by osmotic pressure, temperature, solvent composition, and degree of swelling. The cross-linked gel particles are prepared by inverse emulsion polymerization, precipitation polymerization, or standard suspension polymerization. The gel particles formed by these methods can be as small as in the range of 300Å - 500Å to as large as microns or tens to hundreds of microns. Optimal range of the finite cross-linked gel network size depends on the gel swelling ratio and diameter of the capillary. The aqueous medium for the gel particles can be a buffered solution of various pH and ionic strength or pure deionized water depending on the specific application. The optimal loading of gel particles in suspension for filling capillaries is determined by the viscosity of the suspension with gel particles and swelling/deswelling considerations. In general, the procedure for use includes the steps of 1) capillary filling, 2) swelling and running, and 3) deswelling particles and capillary flushing. Swelling of gel particles can be effected by a change of temperature, pH and ionic strength of solution, electric field, and ions for deswelling.

There are also at least two approaches in physically cross-linked systems. First, one can copolymerize hydrophilic monomers and hydrophobic monomers. Under normal conditions, the copolymers are linear and unassociated, possibly having some entanglement. However, by changes of solvent conditions such as temperature and ionic strength of solution (or pH), the hydrophobic region of the copolymer can be made to coalesce and the copolymer behave like a cross-linked system. In this way one can fill, run, and flush by changing temperature, pH, and ionic strength of solution. Second, by exchanging monovalent ions and divalent ions, e.g., by electrophoresis of buffers, one can make a sieving medium containing conjugated functional groups (ionized groups) which are either cross-linked or dissociated.

In addition to these two specific examples, other members of the general class of electrorheological fluids can be used as separation media. Filling involves zero-field, hydrostatic-driven fluid flow. During analysis, the electric field is switched on, turning the fluid into an immobile solid. After the run, the field is switched off and the medium is liquid again and can be flushed out.

## Brief Description of the Drawings

Figure 1 is a graph of the swelling ratio and volume fraction versus reduced temperature at various f values: 0, 0.659, 1, 2, 3, 4, 5, 6, 7, and 8.

Figures 2A, 2B, and 2C are schematics of filling (Figure 2A), swelling (Figure 2B), and deswelling and flushing capillaries (Figure 2C).

Figure 3 is a graph of the viscosity of suspensions as a function of volume fraction of fillers.

Figure 4 is a graph of the gel swelling ratio $(V/V_o)$ with respect to the volume fraction of acetone and ethanol at different temperatures: open circle, 25°C Acetone; closed circle, 15°C Acetone; open square, ethanol; and closed square, 15°C ethanol.

Figures 5A and 5B are schematics illustrating physically cross-linked systems. Thin lines are hydrophilic polymers and thick lines are hydrophobic polymers. The shaded areas represent physically bonded regions, via the hydrophobic salting out phenomenon.

Figures 6A and 6B are schematics of ionic association, forming physical cross-links: 6A, dissociated state, 6B, associated state.

Figure 7 is a graph of the temperature dependent gel swelling ratio in different solutions. Open symbols (RB) are $(V/V_o)$ in buffer solution (0.025 M Tris-HCL+ 0.192 M glycine + 0.1% Sodium dodecylsulfate). Dark symbols (PW) are $(V/V_o)$ in deionized water. Squares are pH 3; circles pH 4.5, and triangles pH 12.1.

Figure 8 is a graph of the pH dependent gel swelling ratio in different solutions. Open symbols (RB) are $(V/V_o)$ in buffer solution (0.025 M Tris-HCL + 0.192 M Glycine + 0.1% Sodium dodecylsulfate), dark symbols (PW) are $(V/V_o)$ in deionized water. Squares are 25°C, circles are 45°C, and triangles are 15°C.

## Detailed Description of the Invention

Cross-linked systems have been developed for use with capillary electrophoresis (CE) as well as conventional slab and other types of electrophoresis. The cross-linking is achieved either by chemical or physical means. The media is selected to collapse or shrink for ease of filling and flushing and to swell to fill all voids during running. This is achieved by selection of the buffer the gel is suspended in, either through temperature, ionic strength, pH, presence or absence of ions, solvent composition, or some combination thereof.

The media is not only easy to use but achieves high resolution. For example, the relaxation time of polymer is orders of magnitude greater than the residence time of DNA. As a result, cross-linked systems lead to much better resolution than those of entangled polymer solutions.

As discussed above, gel-filled capillaries suffer serious inconvenience in filling and reusability. These problems are overcome by the use either of chemical cross-links or physical cross-links systems.

In order to achieve high resolution of separation, one can vary the mesh size of the sieving medium by increasing T% and C%. However, a high gel swelling ratio is needed. The higher the T% and C%, the lower the gel swelling ratio. Accordingly, one must increase C% (or T%) to achieve high resolution, yet reduce C% (or T%) to have a high swelling ratio. This is achieved using a polyelectrolyte network. One can prepare a negatively charged gel as the sieving medium, from, for example, acrylamide in a concentration of 80%, with sodium acrylate in a concentration of 20%, plus crosslinker. The negatively charged mesh poses a more restrictive barrier for a negatively charged analyte due to electrostatic repulsion. A similar mechanism applies for positively charged analytes. Proteins and DNA are negatively charged so the use of the negatively charged polyelectrolyte (sodium acrylate) reduces the effective mesh size of the sieving medium, increasing resolution. At the same time, the ionic gels have a greater swelling ratio than those of regular gels.

## Chemical Cross-linked systems

A gel is a cross-linked polymer network swollen in a liquid. Its properties depend strongly on the interaction of these two components. The liquid prevents the polymer network from collapsing into a compact mass, and the network, in turn, retains the liquid. Gels are characterized by their equilibrium, dynamic, and kinetic properties. These properties depend on the gel state represented by osmotic pressure, temperature, solvent composition, and degree of swelling. The distance of the gel state from the phase boundary crucially influences all properties. Phase transition in polymer gels has been recently discovered. The state of the gel drastically changes based on the external conditions. The compressibility becomes infinite at a certain critical temperature; the gel can swell or shrink by a factor of as much as 500, depending on temperature. Under a fixed condition, swelling or shrinking is discontinuous, and therefore a minute change in temperature can cause a large change in gel volume. Such transitions can also be effected by altering solvent composition, pH or ionic composition.

The equation of state of gels relates osmotic pressure, polymer-network concentration, temperature and solvent composition (P.J. Flory, *Principles of Polymer Chemistry,* Cornell University Press, Ithaca, NY (1953); K. Dusek and D. Patterson, *J. Poly. Science,* Part A-2, 6, 1209 (1968); and T. Tanaka et. al., *Phys. Rev. Lett.,* 45, 1636 (1980)). There are three pressures acting on the polymer network. Positive pressure of counterions, negative pressure due to the affinity among polymer strands and the rubber elasticity, which keeps the network in a moderate expansion. Phase equilibria of gel can be described using the Flory - Huggins derivation.

equation 1

$$\pi = -\frac{NkT}{v}\left(\phi + \ln(1-\phi) + \frac{\Delta F}{2kT}\phi^2\right) + vkT\left(\frac{\phi}{2\phi_o} - \left(\frac{\phi}{\phi_o}\right)^{1/3}\right) + v fkT\left(\frac{\phi}{\phi_o}\right)$$

where $N$ is Abrogadro's No.; k the Boltzmann constant; T the absolute temperature; v the molar volume of the solvent; $\phi$ the volume fraction of the polymer network; $\Delta F$ the free energy decrease associated with the formation of a contact between polymer segments; $\phi_o$ the network volume fraction at the condition that the constituent polymer chains have random configurations; n the number of constituent chains per unit volume at $\phi = \phi_o$; and f the number of dissociated counterions per effective polymer chain. In equilibrium, e.g. the above equation one can be expressed as:

equation 2:

$$\tau = 1 - \frac{\Delta F}{kT} = -\frac{vv}{N\phi^2}\left((2f+1)\left(\frac{\phi}{\phi_o}\right) - 2\left(\frac{\phi}{\phi_o}\right)^{1/3}\right) + 1 + \frac{2}{\phi} + \frac{2}{\phi^2}\ln(1-\phi)$$

where $\tau$ is the reduced temperature.

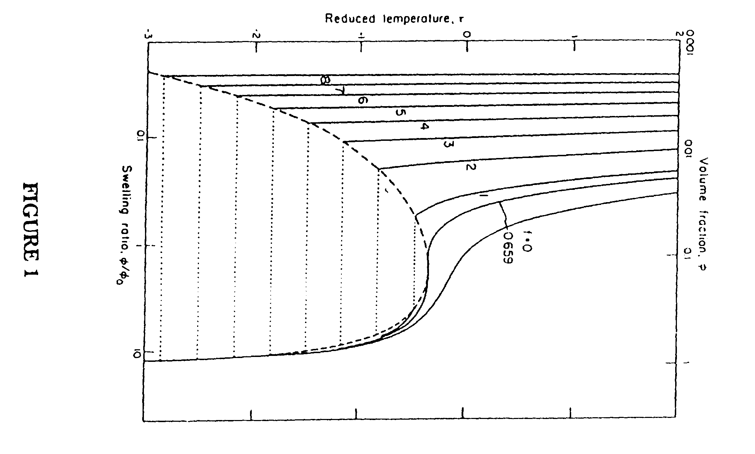

Figure 1 shows the calculated equilibrium swelling ratio as a function of the reduced temperature for various degrees of ionization f. As shown in Figure 1, the hydrolysis of a small amount of acrylamide groups causes a drastic change in the collapse size upon the transition. If the term ln (1-$\phi$) in equation 2 is expanded up to the order $\phi^3$, Equation 2 becomes:

equation 3

$$t = S\left(\rho^{-5/3} - \frac{\rho^{-1}}{2}\right) - \frac{\rho}{3}$$

where

equation 4

$$t = \frac{\left(1 - \frac{\Delta F}{kT}\right)(2f+1)^{3/2}}{2\phi_o}$$

equation 5

$$S = \frac{vv}{N\phi_0^3}(2f+1)^4 = S_o(2f+1)^4$$

equation 6

$$\rho = \frac{\phi}{\phi_o} (2f + 1)^{3/2}$$

In equation 3, parameter $S$ determines whether the volume change is continuous or discontinuous. The parameter can be interpreted in the following manner. An effective polymer chain consists of freely jointed segments of radius a and persistent length b. The volume of solvent molecules is assumed to be $a^3$. Under the assumption that the interaction is negligible among the polymer segments, the average end-to-end distance of the chain is $R \approx n^{1/2}b$. Since R is the mean distance between neighboring cross-links, $v \approx a^2/R^3$, and $\phi \approx n\, b\, a^3/R^3$. Therefore, S can be expressed as:

equation 7

$$S = \left(\frac{b}{a}\right)^3 (2f + 1)^4$$

Equation 7 shows that the $S$ value depends on f and the ratio of the persistent length b to the effective radius a of the polymer chain ($^b$/a) (which represents the stiffness of the chain). Therefore, in order to have a large swelling ratio of the gel (i.e., discontinuous phase transition), the constituent polymer chains must have sufficient stiffness or a sufficient number of ionized groups. Both the counterions to the ionized groups and the stiffness of the polymer chains increase the osmotic pressure acting to expand the polymer network resulting in a discontinuous volume change.

Reversible swelling and contraction of ionic gels can also be induced by changes in pH and ion composition. Such behavior can be explained by the theoretical curves shown in Figure 1: the f value changes with pH. Changes in the ionic strength also induce the phase transition.

Both gel filled CE and CE using entangled polymer solutions have disadvantages in either filling/flushing or resolution reproducibility, capillary reusing. These problems can be overcome by preparing the cross-linked gel in the form of submicron or greater size spheres using inverse emulsion polymerization, precipitation polymerization, or standard suspension polymerization.

Inverse Emulsion Polymerization.

The term 'inverse' emulsion polymerization is used to imply a heterogeneous polymerization system in which the monomer is readily soluble in water, but only sparingly soluble, if at all, in non-polar liquids. Thus, in the inverse emulsion polymerization an aqueous solution of a hydrophilic monomer is dispersed in a continuous hydrophobic medium using a surface-active substance which promotes the formation of water-in-oil emulsions. The polymerization is then initiated with either oil-soluble or water-soluble initiators. Dibenzoyl and dilauroyl peroxides are typical oil-soluble initiators. Sorbitan monostearate is a water-in-oil emulsifier which is suitable for this application.

The inverse emulsion polymerization is as follows. The emulsions are formed by dissolving the emulsifier in o-Xylene or a suitable organic medium such as toluene and adding the aqueous monomer solution with stirring. The crude emulsions are homogenized to decrease the average droplet size and increase the emulsion stability. The emulsions are heated with stirring at 40°C to 70°C to effect polymerization. The time required for complete conversion varies from a few minutes to several hours. The particles formed by this method can be as small as 300 Å depending on the amount of surfactant added. The particles are centrifuged several times with deionized water to be cleaned.

Precipitation Polymerization.

For precipitation polymerization, one needs to know the phase diagram of polymer solutions. For example, the lower critical solution temperature (LCST) of poly-N-isopropylacrylamide poly(NIPAM) in an aqueous medium is about 32°C. Thus it will be precipitated if the polymerization temperature is above 32°C during polymerization. Table 1 shows other similar systems such as poly-NIPAM in aqueous medium whose LCSTs are known.

Table 1:

| List of LCSTs of aqueous polymers | |
|---|---|
| *Polymer and Copolymers* | *LCST (°C)* |
| poly (N-methylacrylamide) | 95 |

Table 1: (continued)

| List of LCSTs of aqueous polymers | |
| --- | --- |
| Polymer and Copolymers | LCST (°C) |
| poly (N-ethylacrylamide) | 80 |
| poly (N-n-butylarcylamide) | 25 |
| N-isopropylacrylamide - co-N-isopropylmethacrylamide | 23 - 40 |
| poly (N-n-propylacrylamide) | 16 - 19 |
| poly (N-n-propylmethacrylamide) | 22 - 29 |
| poly (N-isopropylacrylamide) | 32 |
| poly (N-isopropylmethacrylamide) | 40 |
| poly (N-ethylmethacrylamide) | 54 - 57 |
| poly (N-acroylpiperidine) | 4 - 6 |
| poly (N-methacroylpiperidine) | 18 - 42 |
| poly (N-pyrolichylmethylacrylamide) | 53 |
| poly (N-piperidylmethylacrylamide) | 42 |
| poly (N,N'-diethylacrylamide) | 30 - 32 |

The method is generally as follows. Water soluble monomers are dissolved in water in an Erlenmeyler flask equipped with a condenser, a nitrogen inlet, and a stirrer. Nitrogen is bubbled into the solution and the temperature is controlled at 70°C. Potassium persulfate can be used as an initiator. The reaction is then continued for 24 hrs under mild stirring. The resulting microspheres are centrifuged to separate them from the suspending medium. They are redispersed in water and then are centrifuged several times to increase purity. The size of microspheres can be as small as 500 Å or greater depending on stirring conditions, i.e., the faster the mixture is stirred, the smaller the microspheres.

The monomers that can be used in the above methods include N-adamentylacrylamide, N-Benzylacrylamide, N-Benzylmethacrylamide, N-cyclohexylacrylamide, N,N'-diethylacrylamide, N-dodecylmethacrylamide, N-isobonylacrylamide, N-methymethacrylamide, diacetone acrylamide, N-[3-(dimethylamino) propyl] acrylamide, methacrylamide, and (1-naphthyl methyl) methacrylamide. The following can be used as cross-linkers: N,N' -bis (1,2-ethylene) dimethacrylamide, NN'-ethylenebisacrylamide, N,N'-hexamethyl bisacrylamide, NN'-methylenebisacrylamide, N,N'-methylenebismethacrylamide, NN'-nonomethylenebisacrylammide, NN'-octamethylenebisacrylamide, NN'-(isopropylidene) bisacrylamide, NN'-trimethylenebisacrylamide, piperazine diacrylamide, N,N'-bisacrylylcystamine, and N,N'-diallyltartardiamide. At this time, the most preferred monomers are acrylamide and sodium acrylate. Other monomers and crosslinkers are known to those skilled in the art and can be used in place of any of those listed above.

**Loading of Capillaries.**

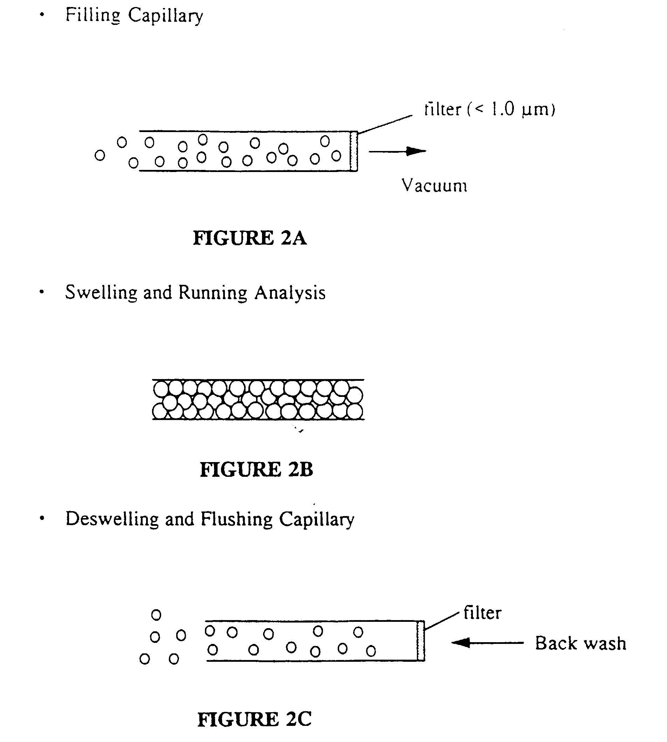

After preparing microspheres of cross-linked gels, the microspheres can be injected, or drawn in by vacuum through a filter of less than one micron size, into capillaries, as shown in Figures 2A. Note that during injection the particles are in a collapsed state. Optimal range of the finite cross-linked gel network size depends on the gel swelling ratio and diameter of the capillaries. The diameter of the capillaries usually varies from 50 $\mu$m to 100 $\mu$m. From gel swelling equilibria data, one can predict the number density of microspheres in aqueous medium. This aqueous medium can be a buffer solution or deionized water, depending on the specific particles in suspension for filling capillaries, which is determined by the viscosity of the suspension (with particles) and swelling/deswelling considerations.

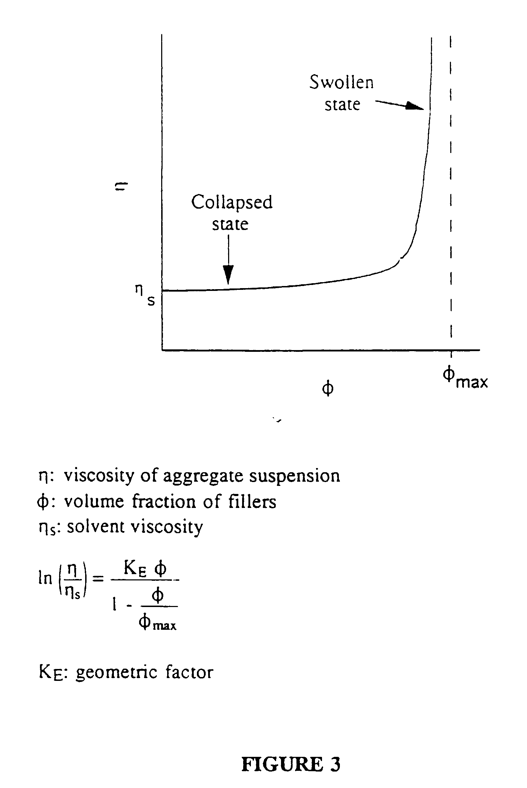

Figure 3 shows a typical viscosity curve of suspension with fillers. The viscosity can be expressed by

equation 8
$$\ln \left( \frac{\eta}{\eta_s} \right) = \frac{K_E \phi}{1 - \dfrac{\phi}{\phi_{max}}}$$

where n is the viscosity of aggregate-filled suspension, $\phi$ the volume fraction of fillers, $n_s$ solvent viscosity, and $K_E$ is a geometric factor. If one assumes the particles are spherical, $K_E = 2.5$ (Einstein's equation).

**Variation in Gel swelling at each stage of process.**

At the first stage, the capillary filling stage, the temperature should be controlled at the above-the-discontinuous-volume-change phase region, so that the particles are in a collapsed state. By knowing the swelling ratios of gels, the number density and size of particles can be determined. At the end of the capillary, one can put a filter whose pore size is less than the collapsed particles so that only the suspending liquid can pass through, as shown in Figure 2A.

At the second stage, the swelling and running stage, the temperature should be raised above the discontinuous-volume-change-region so that the particles are swollen. As shown in Figure 2B, the total particle volume is such that the particles butt up against one another to become a continuous phase. As a result, the capillary is filled with particles only and contains no voids.

In the third stage, deswelling particles and capillary flushing, the temperature is changed to the temperature used in the capillary filling stage so that the particles collapse.

Deswelling of gels can be accomplished by several methods other than changing temperature. Reversible swelling and contraction of ionic gels can be effected by changes of pH and ion compositions consistent with the essential role of ionization in phase transition. When the pH varies or salt ions are added to the solvent, the effective number of counterions varies, as does the ionic osmotic pressure. The higher the pH or ion concentration, the more the gel swells. Changes in the ionic composition can also induce phase transition. The concentration needed for the transition differs by four orders of magnitude between monovalent NaCl and divalent $NgCl_2$. It is possible to use a combination of parameters synergistically to achieve deswelling. For example, one can change the temperature to a point at which the gel spheres shrink and then pass a buffer solution through low pH or low ion concentration by electrophoresis. Thus, the gel spheres shrink further, and can be easily flushed out of the separation device (capillary slab, or annular), as shown in Figure 2C.

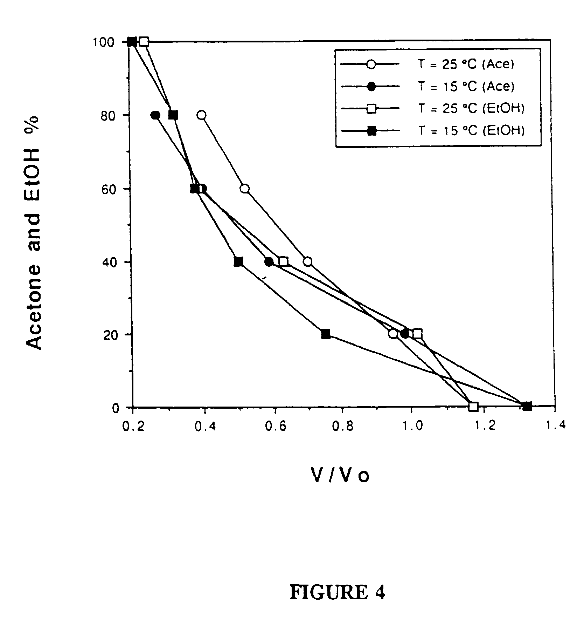

Alternatively, as shown in Figure 4, with the acrylamide monomers referenced above, a ketone or low alcohol such as acetone, methanol or ethanol is injected into the capillary so the particles are collapsed to a minimum for easy flushing.

**Physical Cross-linked Systems.**

There are at least two different approaches in physically cross-linked systems. First, by copolymerizing hydrophilic and hydrophobic monomers into blocky structures, the hydrophobic region can be physically bonded and released by changing temperature and ionic strength of the buffer solution. Second, exchanging monovalent ions for divalent ions by electrophoresis can make a sieving medium which contains conjugate functional groups cross-link or dissociate.

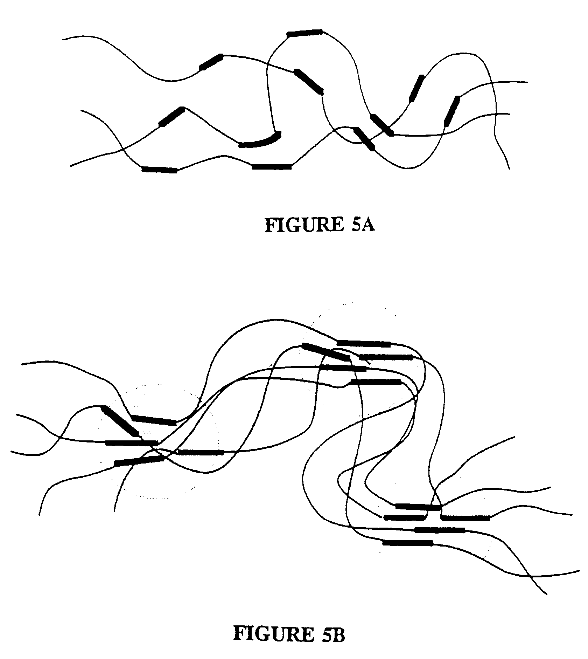

Figure 5 is a schematic illustration of one physically cross-linked system. In this Figure, thin solid lines denote hydrophilic regions and thick solid lines represent hydrophobic region. Under normal conditions, the copolymers are linear (see Figure 5A), however, by changing the solvent conditions, such as temperature and ionic strength (or pH), the hydrophobic regions may coalesce and the copolymer behave like a cross-linked system, as shown in Figure 5B. In this way, the capillary can be filled at a certain temperature, ionic strength and pH at which the polymer molecules are separate and can easily flow. Then the system can be physically cross-linked by a change of temperature and/or ionic strength and pH. After the analysis, the capillary can be easily flushed by changing these conditions back to the conditions at which the capillary was filled.

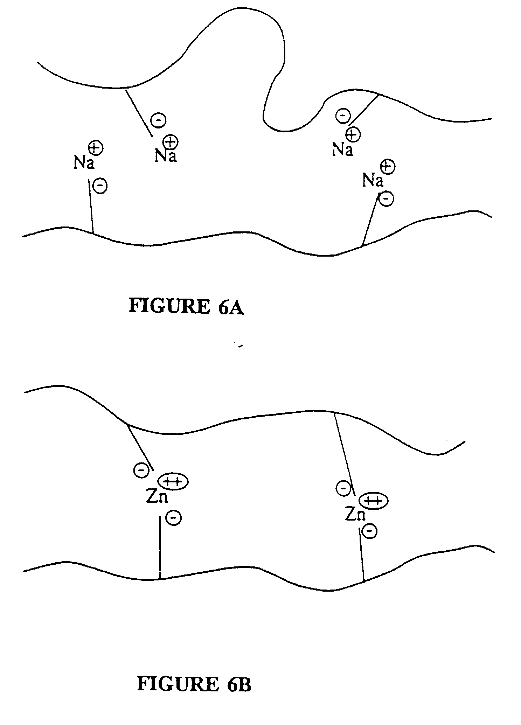

The second method for a physically cross-linked system utilizes exchange of monovalent ions and divalent ions, for example, by electrophoresis of buffers, to make a sieving medium containing conjugate functional groups cross-link or dissociate. Figures 6A and 6B illustrate this process.

In Figure 6A, the polymers are not cross-linked. In Figure 6B, a buffer containing zinc divalent ions has been added, displacing the sodium salts and crosslinking the polymers.

In a variation of this, the polymer contains metal containing compounds or metal chelating compounds. Crosslinking is achieved by introduction of chelators or the metal ions, respectively.

The present invention will be further understood by reference to the following non-limiting examples.

**Example 1: Preparation of Cross-linked gel particles.**

A. Inverse Emulsion Polymerization

In inverse emulsion polymerization an aqueous solution of a hydrophilic monomer is dispersed in a continuous hydrophobic oil medium using a surface-active substance which promotes the formation of water-in-oil emulsions. The polymerization is then initiated with either oil-soluble or water-soluble initiators. As far as the end-product of the reaction is concerned, it is clear that inverse lattices are less stratified or flocculate more readily. Continuous and gentle agitation is needed to maintain these lattices as colloidal dispersion indefinitely.

Acrylamide was used as the water soluble monomer and N,N'-methylene-bis-acrylamide as a cross-linker to prepare a $T_{10} C_2$ solution, where

$$\%T = \frac{\text{grams of acrylamide} + \text{grams of cross-linker}}{\text{Total volume}} \times 100$$

$$\%C = \frac{\text{grams of cross-linker}}{\text{grams of acrylamide} + \text{grams of crosslinker}} \times 100$$

Sorbitan monostearate (SMS) was used as an emulsifier. The emulsions were formed by dissolving 0.875 g of SMS in 7 ml of o-Xylene and adding $T_{10} C_2$ solution (the aqueous monomer solution) with stirring for about 3 to 4 hrs. The temperature is controlled at about 50°C during polymerization. The crude emulsions are homogenized to decrease the average droplet size and to increase the emulsion stability.

After complete polymerization, the final gel particles can be cleaned by centrifuging several times with deionized water. The gel particles are not monodisperse, however one can filter them to a certain size range, for example, using a 1 μ filter to collect particles less than 1 μ.

B. Precipitation Polymerization

As stated above, precipitation polymerization is carried out above the LCST of the system. The following reagents were combined:

N-isopropylacrylamide: 4.9 g
N,N'-methylene-bis-acrylamide: 0.1 g
Potassium persulfate: 0.2 g
deionized water: 200 ml

The system temperature was controlled at about 70°C.
The final gel particles are reasonably monodisperse.

**Example 2: Changing of gel swelling equilibria by changing ambient conditions.**

The gel swelling equilibria can be changed by changing ambient conditions, i.e. temperature, pH, solvent. Gel disks were prepared by casting in glass tubes (ID = 6.4mm). The gel disk dimensions were about 6 mm in diameter and about 13 mm in thickness. After preparing the gel disks, each sample was blotted with laboratory tissue to remove surface water, and weighed. The swelling capacity was determined as the mass ratio of swollen gel to the gel prepared. The volume of the gel as cast (not the dry gel) is denoted by $V_o$.

In each swelling capacity measurement, the diameter and the length of each gel disk was also measured. The properties for acrylamide/N,N'-methylene-bis-acrylamide gels prepared with 10%T and 2% C are shown in Figures 4, 7, and 8.

Figure 4 shows that the volume ratio ($V/V_o$) of the gel particles can be decreased with increasing concentrations of ethanol or acetone can be reduced from 1.2-1.4 to 0.2-0.3.

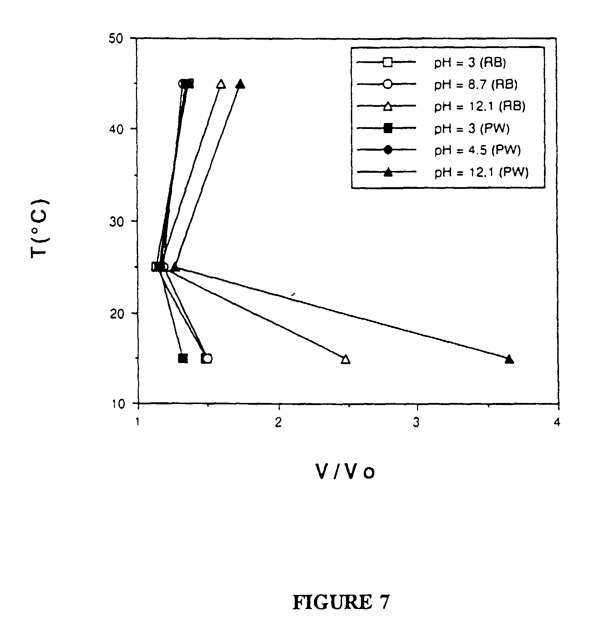

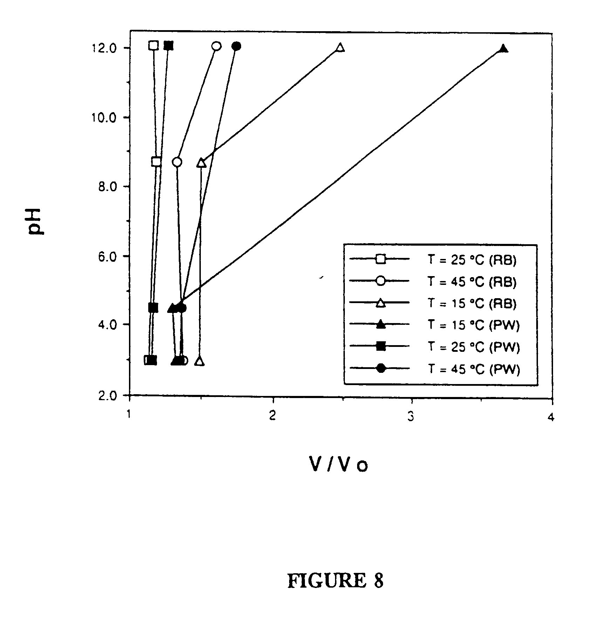

Figures 7 and 8 shcw that the volume ratio ($V/V_o$) can be decreased as a function of pH and temperature.

**Claims**

1. An electrophoretic device comprising an electrophoretic medium capable of reversibly going from a first, flowable state to a second, gelled state, said medium comprising; (1) polymeric molecules capable of being reversibly cross-linked; or (2) polymeric molecules having hydrophobic regions capable of being reversibly coalesced; or (3) discrete particles of cross-linked polymers capable of reversibly swelling.

2. The device of Claim 1, wherein said medium comprises said discrete particles.

3. The device of Claim 1, wherein said medium comprises said polymeric molecules capable of being reversibly cross-linked or said polymeric molecules having hydrophobic regions capable of being reversibly coalesced.

4. The device of Claim 3, wherein said medium is a reversibly cross-linked polymeric gel.

**5.** The device of Claim 4, wherein said gel is chemically cross-linked.

**6.** The device of Claim 4, wherein said gel is physically cross-linked.

**7.** The device of any one of the preceding claims, wherein said medium is in the shape of a slab or capillary.

**8.** The device of Claim 1 or Claim 3, wherein said reversibly cross-linked or coalesced polymeric molecules are block polymers, block copolymers, or graft copolymers of hydrophobic or hydrophilic monomers.

**9.** The device of Claim 8, wherein the polymeric molecules are cross-linked by interaction with metal ions or chelating agents.

**10.** The device of Claim 8, wherein the polymeric molecules are charged.

**11.** The device of any of Claims 1 to 3 or 8, wherein said medium goes from said first to said second state by a change in temperature, ionic strength, pH, variation in the amount of metal ions or chelators, solvent composition, electric field or combination thereof.

**12.** A method for filling a gel holder for a gel electrophoresis device, said method comprising:

introducing into said holder in flowable form in a first state an electrophoretic medium capable of reversibly going from a first, flowable state to a second, gelled state, said medium comprising: (1) polymeric molecules capable of being reversibly cross-linked; (2) polymeric molecules having hydrophobic regions capable of being reversibly coalesced; or (3) discrete particles of cross-linked polymers capable of reversibly swelling; wherein said electrophoretic medium goes from said first state to said second state by a change in temperature, ionic strength, pH, variation in the amount of metal ions or chelators, solvent composition, electric field or combination thereof;
changing said electrophoretic medium from said first state to said second state; whereby said gel holder is ready for use in gel electrophoresis.

**13.** The process of Claim 12, wherein said changing is as a result of changing the temperature, pH, presence or absence of metal ions, or solvent composition.

**14.** The process of Claim 13, wherein said second state is produced free of voids by changing the temperature, pH or solvent.

**15.** The process of Claim 14, further comprising the step of analyzing a sample with said electrophoretic medium in said second state in said gel holder.

**16.** The process of Claim 15, further comprising the step of changing said electrophoretic medium from said second state to said first state.

**17.** The process of Claim 12, wherein said first state comprises said discrete particles.

**18.** The process of Claim 12, wherein said first state comprises polymeric molecules substantially independent of each other.

**19.** The process of any one of Claims 12 to 18, wherein said gel holder is a slab holder or capillary holder.

**20.** The process of Claim 12, wherein said polymeric molecules capable of being reversibly cross-linked or having hydrophobic regions capable of being reversibly coalesced are block polymers, block copolymers, or graft copolymers of hydrophobic and hydrophilic monomers.

**21.** The process of Claim 12, wherein said polymeric molecules capable of being reversibly cross-linked are cross-linked by metal ions or chelating agents.

# EP 0 667 957 B1

**Patentansprüche**

1. Elektrophoresevorrichtung, umfassend ein Elektrophoresemedium, das reversibel von einem ersten fließfähigen Zustand in einem zweiten gelierten Zustand übergehen kann, wobei das Medium folgendes umtaßt: (1) polymere Moleküle, die reversibel vernetzt werden können; oder (2) polymere Moleküle mit hydrophoben Bereichen, die reversibel koalesziert werden können; oder (3) diskrete Teilchen vernetzter Polymere, die reversibel quellen können.

2. Vorrichtung nach Anspruch 1, worin das Medium die diskreten Teilchen umfaßt.

3. Vorrichtung nach Anspruch 1, worin das Medium die polymeren Moleküle, die reversibel vernetzt werden können, oder die polymeren Moleküle mit hydrophoben Bereicnen, die reversibel koalesziert werden können, umfaßt.

4. Vorrichtung nach Anspruch 3, worin das Medium ein vernetztes Polymergel ist.

5. Vorrichtung nach Anspruch 4, worin das Gel chemisch vernetzt ist.

6. Vorrichtung nach Anspruch 4, worin das Gel physikalisch vernetzt ist.

7. Vorrichtung nach einem der vorhergehenden Ansprüche, worin das Medium in Form einer Platte oder Kapillare vorliegt.

8. Vorrichtung nach Anspruch 1 oder 3, worin die reversibel vernetzten oder koaleszierten polymeren Moleküle Blockpolymere, Blockcopolymere oder Propfcopolymere hydrophober und hydrophiler Monomere sind.

9. Vorrichtung nach Anspruch 8, worin die Polymermoleküle durch Wechselwirkung mit Metallionen oder Chelatbildnern vernetzt sind.

10. Vorrichtung nach Anspruch 8, worin die polvmeren Moleküle geladen sind.

11. Vorrichtung nacn einem der Ansprüche 1 bis 3 oder 8, worin das Medium durch Änderung der Temperatur, der lonenstärke, des pH-Werts, der Gegenwart oder Abwesenheit von Metallionen oder Chelatbildnern, der Lösengsmittelzusammensetzung, des elektrischen Felds oder durch eine Kombination davon vom ersten in den zweiten Zustand übergeht.

12. Verfahren zum Befüllen eines Gelträgers für ein Gelelektrophorese-Vorrichtung, welches Verfahren folgendes umfaßt:

    Einbringen eines Elektrophoresemediums in fließfähiger Form in einem ersten Zustand in den Träger, welches Medium reversibel von einem ersten flüssigen Zustand in einen zweiten gelierten Zustand übergehen kann und folgendes umfaßt: (1) polymere Moleküle, die reversibel vernetzt werden können; (2) polymere Moleküle mit hydrophoben Bereichen, die reversibel koalesziert werden können; oder (3) diskrete Teilchen vernetzter Polymere, die reversibel quellen können; worin das Elektrophoresemedium durch Änderung der Temperatur, der lonenstärke, des pH-Werts, der Gegenwart oder Abwesenheit von Metallionen oder Chelatbildnern, der Lösungsmittelzusammensetzung, des elektrischen Felds oder durch eine Kombination davon vom ersten Zustand in den zweiten Zustand übergeht;
    Überführen des Elektrophoresemediums vom ersten Zustand in den zweiten Zustand; wodurch der Gelträger zur Verwendung für die Gelelektrophorese bereit ist.

13. Verfahren nach Anspruch 12, worin die Überführung infolge einer Änderung der Temperatur, des pH-Werts, der Gegenwart oder Abwesenheit von Metallionen oder der Lösungsmittelzusammensetzung erfolgt.

14. Vertahren nach Anspruch 13, worin der zweite Zustand durch eine Änderung der Temperatur, des pH-Werts oder des Lösungsmittels frei von Zwischenräumen herbeigerührt wird.

15. Verfahren nach Anspruch 14, weiters umfassend den Schritt des Analysierens einer Probe mit dem im Gelträger befindlichen Elektrophoresemedium im zweiten Zustand.

**16.** Verfahren nach Anspruch 15, weiters umfassend den Schritt des Überführens des Elektrophoresemediums vom zweiten Zustand in den ersten Zustand.

**17.** Verfahren nach Anspruch 12, worin der erste Zustand die diskreten Teilchen umfaßt.

**18.** Verfahren nach Anspruch 12, worin der erste Zustand polymere Moleküle umtaßt, die im wesentlichen voneinander unabhängig sind.

**19.** Verfahren nach einem der Ansprüche 12 bis 18, worin der Gelträger ein Platten- oder Kapillarträger ist.

**20.** Verfahren nach Anspruch 12, worin die polymeren Moleküle, die reversibel vernetzt werden können oder hydrophobe Bereiche aufweisen, die reversibel koalesziert werden können, Blockpolymere, Blockcopolvmere oder Propfcopolymere hydrophober und hydrophiler Monomere sind.

**21.** Verfahren nach Anspruch 12, worin die polymeren Moleküle, die reversibel vernetzt werden können, durch Metallionen oder Chelatbildner vernetzt werden.

**Revendications**

**1.** Dispositif d'électrophorèse comprenant un milieu d'électrophorèse capable d'aller réversiblement d'un premier état d'écoulement à un second état gélifié, ledit milieu comprenant; (1) des molécules polymériques capables d'être réticulées réversiblement; ou (2) des molécules polymériques ayant des régions hydrophobes capables d'être réversiblement coalescées; ou (3) des particules discrètes de polymères réticulés capables de gonfler réversiblement.

**2.** Dispositif selon la revendication 1, où ledit milieu comprend lesdites particules discrètes.

**3.** Dispositif selon la revendication 1, où ledit milieu comprend lesdites molécules polymériques capables d'être réticulées réversiblement ou lesdites molécules polymériques ayant des régions hydrophobes capables d'être coalescées réversiblement.

**4.** Dispositif selon la revendication 3, où ledit milieu est un gel polymérique réticulé.

**5.** Dispositif selon la revendication 4, où ledit gel est réticulé chimiquement.

**6.** Dispositif selon la revendication 4, où ledit gel est réticulé physiquement.

**7.** Dispositif selon l'une quelconque des revendications précédentes, où ledit milieu est sous la forme d'une plaque ou d'un capillaire.

**8.** Dispositif selon la revendication 1 ou la revendication 3, où lesdites molécules polymériques réticulées ou coalescées réversiblement sont des polymères blocs, des copolymères blocs, ou des copolymères greffés de monomères hydrophobes ou hydrophiles.

**9.** Dispositif selon la revendication 8, où les molécules polymériques sont réticulées par une interaction avec des ions métalliques ou des agents chélatants.

**10.** Dispositif selon la revendication 8, où les molécules polymériques sont chargées.

**11.** Dispositif selon l'une quelconque des revendications 1 à 3 ou 8, où ledit milieu va dudit premier état audit second état par un changement de température, de force ionique, de pH, la présence ou l'absence d'ions métalliques ou d'agents chélatants, la composition du solvant, le champ électrique ou une combinaison de ceux-ci.

**12.** Méthode pour remplir un récipient de gel pour un dispositif d'électrophorèse sur gel, ladite méthode comprenant:

introduction dans ledit récipient sous une forme écoulable dans un premier état d'un milieu d'électrophorèse capable d'aller réversiblement d'un premier état liquide à un second état gélifié, ledit milieu comprenant: (1) des molécules polymériques capables d'être réticulées réversiblement; (2) des molécules polymériques ayant des régions hydrophobes capables d'être coalescées; ou (3) des particules discrètes de polymères réticulés capables de gonfler réversiblement; où ledit milieu d'électrophorèse va dudit premier état audit second état par un changement de la température, de la force ionique, du pH, de la présence ou de l'absence d'ions métalliques ou d'agents chélatants, de la composition du solvant, du champ électrique ou d'une combinaison de ceux-ci ;

Le changement dudit milieu d'électrophorèse dudit premier état audit second état; ce par quoi ledit récipient de gel est prêt pour une utilisation dans une électrophorèse sur gel.

13. Procédé selon la revendication 12, où ledit changement est un résultat du changement de la température, du pH, de la présence ou de l'absence d'ions métalliques, ou de la composition du solvant.

14. Procédé selon la revendication 13, où ledit second état est produit exempte de vide par changement de la température, du pH ou du solvant.

15. Procédé selon la revendication 14, comprenant de plus l'étape d'analyse d'un échantillon avec ledit milieu d'électrophorèse dans ledit second état dans ledit récipient de gel.

16. Procédé selon la revendication 15, comprenant de plus l'étape de changement dudit milieu d'électrophorèse dudit second état audit premier état.

17. Procédé selon la revendication 12, où ledit premier état comprend des particules discrètes.

18. Procédé selon la revendication 12, où ledit premier état comprend des molécules polymériques substantiellement indépendantes l'une de l'autre.

19. Procédé selon l'une quelconque des revendications 10 à 12, où ledit récipient de gel est un récipient en plaque ou un récipient capillaire.

20. Procédé selon la revendication 12, où lesdites molécules polymériques capables d'être réticulées réversiblement ou ayant des régions hydrophobes capables d'être coalescées réversiblement sont des polymères blocs, des copolymères blocs, ou des copolymères greffés de monomères hydrophobes et hydrophiles.

21. Procédé selon la revendication 12, où lesdites molécules polymériques capables d'être réticulées réversiblement sont réticulées par des ions métalliques ou des agents chélatants.

**FIGURE 1**

EP 0 667 957 B1

- Filling Capillary

filter (< 1.0 μm)

Vacuum

**FIGURE 2A**

- Swelling and Running Analysis

**FIGURE 2B**

- Deswelling and Flushing Capillary

filter

Back wash

**FIGURE 2C**

η: viscosity of aggregate suspension

φ: volume fraction of fillers

$\eta_s$: solvent viscosity

$$\ln\left(\frac{\eta}{\eta_s}\right) = \frac{K_E\,\phi}{1 - \dfrac{\phi}{\phi_{max}}}$$

$K_E$: geometric factor

**FIGURE 3**

**FIGURE 4**

**FIGURE 5A**

**FIGURE 5B**

**FIGURE 6A**

**FIGURE 6B**

**FIGURE 7**

FIGURE 8